# EUROPEAN PATENT APPLICATION

(11) **EP 4 550 496 A1**
(43) Date of publication of application: **07.05.2025**
(21) Application number: 24199786.5
(22) Date of filing: 11.09.2024
(51) Int. Cl.: H01M 10/04, H01M 50/209, H01M 50/242, H01M 50/291

(54) **BATTERY MODULE**

(30) Priority: 03.11.2023 KR 20230151245
(71) Applicant: SAMSUNG SDI CO., LTD., Yongin-si, Gyeonggi-do 17084 (KR)
(72) Inventor: Chae, Heedong, 17084 Yongin-Si, Gyeonggi-do (KR); Lee, Youngjin, 17084 Yongin-Si, Gyeonggi-do (KR); Jeon, Du Seong, 17084 Yongin-Si, Gyeonggi-do (KR)
(74) Representative: Gulde & Partner

(57) **Abstract**

The present disclosure provides a battery module (100) including an end plate (61, 62, 210, 310, 410, 610, 710, 810a, 810b) fastened to a first buffer member (70a, 70b, 220, 320, 420, 620, 720, 820a, 820b). The battery module (100) includes battery cells (10, 10a, 830a, 830b) arranged in one direction, an end plate (61, 62, 210, 310, 410, 610, 710, 810a, 810b) facing an outer surface of an outermost battery cell (10a, 830a) among the battery cells (10, 10a, 830a, 830b), and at least one first buffer member (70a, 70b, 220, 320, 420, 620, 720, 820a, 820b) fastened to the end plate (61, 62, 210, 310, 410, 610, 710, 810a, 810b), and including a curved portion (622, 722) protruding toward the outermost battery cell (10a, 830a), and leg portions (624a, 624b, 724a, 724b) respectively on opposite sides of the curved portion (622, 722).

## Description

### BACKGROUND

### 1. Field

Aspects of embodiments of the present disclosure relate to battery module.

### 2. Description of Related Art

Secondary batteries are rechargeable batteries that may be charged and discharged multiple times. Such secondary batteries are mainly used in various application fields, such as electronic products (smartphones, laptops, tablets, and so on), electric vehicles, solar power generation devices, and emergency power supplies. For example, lithium-ion batteries have high energy density and high charge/discharge efficiency, thereby being used in various electronic products and electric vehicles.

After secondary batteries (e.g., rechargeable lithium-ion batteries) are repeatedly charged and discharged, swelling of a battery, due to a volume of one or more battery cells expanding, may occur due to electrical and chemical reactions that may occur inside the second batteries and that may be caused by deterioration, damage, etc. of the lithium-ion batteries. Forcible limitation of volume expansion of battery cells may decrease lifespan and performance of a battery, and a method of efficiently reducing the volume expansion of the battery cells is suitable.

The above information disclosed in this Background section is for enhancement of understanding of the background of the present disclosure, and therefore, it may contain information that does not constitute related (or prior) art.

### SUMMARY

The present disclosure provides a battery module including an end plate fastened to a buffer member.

These and other aspects of the present disclosure will be described in, or will be apparent from, the following description of embodiments of the present disclosure.

To solve the above, a battery module according to one or more embodiments of the present disclosure includes battery cells arranged in one direction, an end plate facing an outer surface of an outermost battery cell among the battery cells, and at least one first buffer member fastened to the end plate, and including a curved portion protruding toward the outermost battery cell, and leg portions respectively on opposite sides of the curved portion.

The end plate may define (e.g., include) insertion grooves for enabling (e.g., formed to cause) the leg portions of the at least one first buffer member to be slidably inserted from an upper end of the end plate to a lower end of the end plate.

The insertion grooves may extend through the end plate from an upper side of the end plate to a lower side of the end plate.

In a state where the leg portions are fixed in (e.g., fastened to) the insertion grooves, surfaces defining the insertion grooves may be respectively parallel to surfaces of the leg portions.

A height of the end plate may be substantially equal to or higher than a height of the at least one first buffer member.

The insertion grooves may be respectively on (e.g., formed on) opposite ends of the end plate.

The insertion grooves may be respectively defined by (e.g., formed in) inner surfaces of protrusions respectively on (e.g., formed on) the opposite ends of the end plate.

The curved portion of the at least one first buffer member may protrude toward the outermost battery cell more than the protrusions.

The insertion grooves may be inside (e.g., formed inside) the end plate, wherein the leg portions may be respectively accommodated in the insertion grooves.

A distance between outermost surfaces of the insertion grooves may be greater than a width of the at least one first buffer member.

The curved portion of the at least one first buffer member may include an elastic material configured to absorb pressure due to deformation of a curved shape.

Positions of the leg portions of the at least one first buffer member may be configured to change as a curved shape of the curved portion changes.

Positions of the leg portions may respectively move in opposite directions (e.g., left and right directions) under pressure such that the width of the at least one first buffer member increases.

The battery module may further include at least one second buffer member between the battery cells. The at least one second buffer member may include a buffer pad (or shock pad), and a support portion for supporting the buffer pad.

The support portion may be fixed to (or fixed and coupled to) an edge of the buffer pad.

The support portion may be fixed to (or fixed and coupled to) opposite edges of the buffer pad.

The buffer pad may be configured to absorb pressure applied from battery cells respectively arranged on opposite sides of the buffer pad.

A thickness of the buffer pad may be greater than a thickness of the support portion, and the buffer pad may protrude on opposite sides of the support portion.

A material of the buffer pad may include a microporous material or an elastic polymer compound.

The support member may include an injection-molded plastic material.

According to some embodiments of the present disclosure, as a buffer member is coupled to an end plate, pressure due to volume expansion of a battery cell in the outermost portion among a plurality of battery cells accommodated in a battery module may be effectively absorbed by a buffer member.

According to some embodiments of the present disclosure, a buffer member including a buffer pad is further provided between battery cells to further reduce the pressure due to volume expansion of battery cells, and it may be possible to effectively reduce or prevent a decrease in lifespan or performance of a battery module due to swelling of the battery cells.

According to some embodiments of the present disclosure, an insertion groove is formed in an end plate such that a buffer member may be suitably fastened to the insertion groove by a slide insertion method, and efforts and costs associated with a process of assembling the end plate and a buffer member may be reduced.

According to some embodiments of the present disclosure, an insertion groove formed in an end plate has a free space that may accommodate a change in width of a buffer member, which is lengthened in the left and right directions due to the pressure applied to a buffer member, and pressure due to volume expansion of battery cells may be effectively absorbed.

However, aspects of the present disclosure are not limited to those described above, and other aspects not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

The following drawings attached to this specification illustrate embodiments of the present disclosure, and further describe aspects of the present disclosure together with the detailed description of the present disclosure. Thus, the present disclosure should not be construed as being limited to the drawings:
FIG. 1 illustrates a perspective view showing a battery module according to one or more embodiments of the present disclosure;
FIG. 2 illustrates an exploded perspective view showing an end plate and a buffer member according to one or more embodiments of the present disclosure;
FIG. 3 illustrates a perspective view showing an example of a state in which an end plate is coupled to a buffer member, according to one or more embodiments of the present disclosure;
FIG. 4 illustrates a perspective view showing an example of a method of coupling a buffer member to an end plate, according to one or more embodiments of the present disclosure;
FIG. 5 illustrates an example of a shape in which a buffer member is deformed in a state where pressure is applied to the buffer member, according to one or more embodiments of the present disclosure;
FIG. 6 illustrates an example of a state in which an end plate is coupled to a buffer member, according to one or more embodiments of the present disclosure;
FIG. 7 illustrates an example of a state in which an end plate is coupled to a buffer member, according to one or more other embodiments of the present disclosure;
FIG. 8 illustrates an example in which a second buffer member is provided between a battery cell and an adjacent battery cell, according to one or more embodiments of the present disclosure;
FIG. 9 illustrates an example of a second buffer member, according to one or more embodiments of the present disclosure; and
FIG. 10 illustrates an example of a second buffer member according to one or more other embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

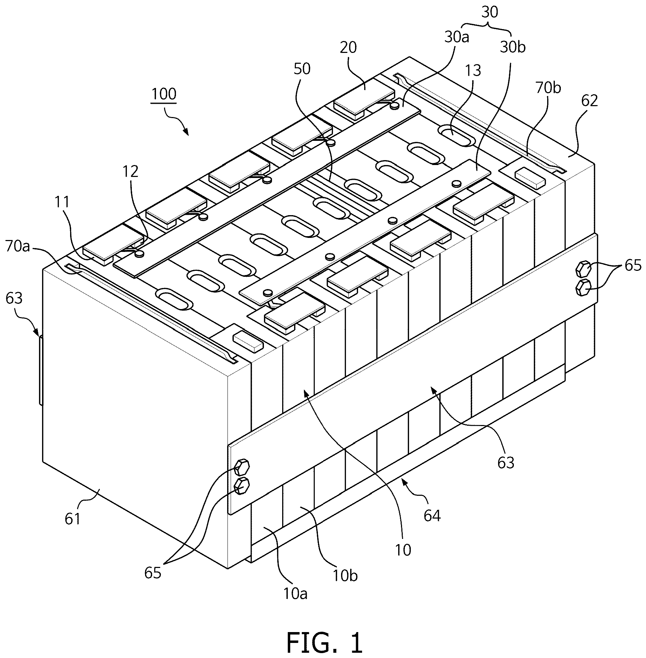

FIG. 1 illustrates a perspective view showing a battery module according to one or more embodiments of the present disclosure.

Referring to FIG. 1, the battery module 100 according to one or more embodiments of the present disclosure includes terminal parts 11 and 12, a plurality of battery cells 10 arranged in one direction, a connection tab 20 for connecting a battery cell 10a to an adjacent battery cell 10b, and a protection circuit module 30 having one end connected to the connection tab 20. The protection circuit module 30 may include a battery management system (BMS). Further, the connection tab 20 may include a body portion in contact with the terminal parts 11 and 12 between the adjacent battery cells 10a and 10b, and an extension portion extending from the body portion and connected to the protection circuit module 30. The connection tab 20 may be, for example, a bus bar.

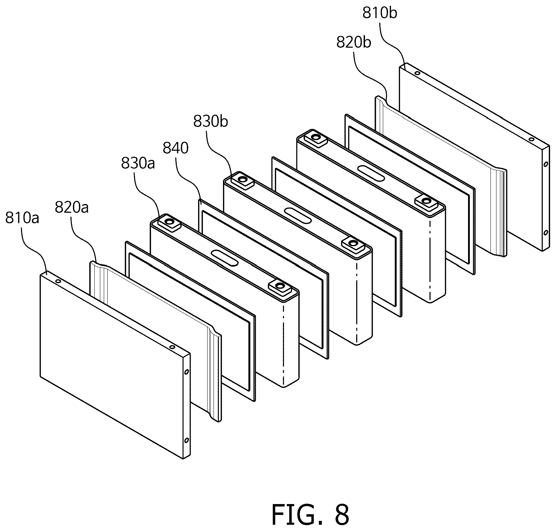

Each battery cell 10 may include a battery case, an electrode assembly received (or accommodated) in the battery case, and an electrolyte. The electrode assembly and the electrolyte may react electrochemically to store and release (e.g., generate) energy. Terminal parts 11 and 12 electrically connected to the connection tab 20, and a vent 13 as a discharge passage for gas generated inside the battery case, may be provided on one side of (e.g., an upper side of) the battery cell 10. The terminal parts 11 and 12 of the battery cell 10 may be, for example, a positive electrode terminal 11 and a negative electrode terminal 12 having different respective polarities. The terminal parts 11 and 12 of the adjacent battery cells 10a and 10b may be electrically connected to each other in series or in parallel by the connection tab 20, to be described in more detail below. Although a serial connection has been described as an example, the connection structure is not limited thereto, and various connection structures may be employed as desired or suitable. In one or more embodiments, the number and arrangement of battery cells is not limited to the structure illustrated in FIG. 8, and may be changed as desired or suitable.

The battery cells 10 may be arranged in (e.g., may be stacked in) one direction so that the wide surfaces of the battery cells 10 face each other, and the battery cells 10 may be fixed by plates 61, 62, 63, and 64. The plates 61, 62, 63, and 64 may include a pair of end plates 61 and 62 facing the wide surfaces of the battery cell 10, and a side plate 63 and a bottom plate 64 connecting the pair of end plates 61 and 62 to each other. The side plate 63 may support side surfaces of the battery cells 10, and the bottom plate 64 may support bottom surfaces of the battery cells 10. In one or more embodiments, the pair of end plates 61 and 62, the side plate 63, and the bottom plate 64 may be connected by, or secured by, bolts 65 and/or any other suitable fastening members and methods.

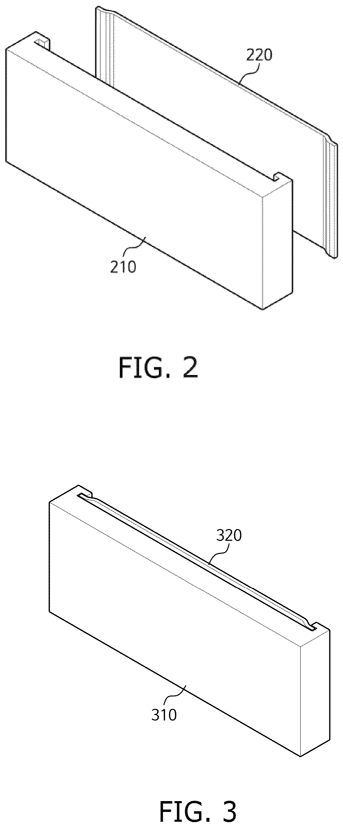

According to one or more embodiments, buffer members 70a and 70b, each of which including a curved portion protruding toward the battery cells 10, may be respectively fastened to one surface of the end plates 61 and 62. The end plates 61 and 62 may have insertion grooves, such that the buffer members 70a and 70b may be respectively slidably inserted into, and respectively fastened to, the end plates 61 and 62. Detailed descriptions of structures and shapes of the end plates 61 and 62 and the buffer members 70a and 70b will be described with reference to FIGS. 2 to 7.

According to one or more embodiments, the battery module 100 may further include a buffer member including a buffer pad between adjacent battery cells 10a and 10b. Detailed descriptions of the buffer member located between adjacent battery cells 10a and 10b will be described with reference to FIGS. 8 to 10.

The protection circuit module 30 may have electronic components and protection circuits mounted thereon, and may be electrically connected to connection tabs 20, to be described in more detail later. The protection circuit module 30 includes a first protection circuit module 30a and a second protection circuit module 30b extending along the direction in which the battery cells 10 are arranged in different locations. The first protection circuit module 30a and the second protection circuit module 30b may be spaced from each other at a suitable interval (e.g., a predetermined interval), may be arranged parallel to each other, and may be electrically connected to adjacent connection tabs 20, respectively. The connection may be performed by any one of soldering, resistance welding, laser welding, projection welding, and/or any other suitable connection methods. Furthermore, shock may be absorbed by elasticity or flexibility of a connection member 50 during swelling of the battery cell 10, and damage to the first and second protection circuit modules 30a and 30b may be reduced or prevented. Furthermore, a shape and structure of the connection member 50 are not limited to the shape illustrated in FIG. 1.

FIG. 2 illustrates an exploded perspective view showing an end plate 210 and a buffer member 220 according to one or more embodiments of the present disclosure.

The end plate 210 illustrated in FIG. 2 may correspond to any one of the end plates 61 or 62 illustrated in FIG. 1. Furthermore, the buffer member 220 illustrated in FIG. 2 may correspond to any one of the buffer members 70a or 70b illustrated in FIG. 1.

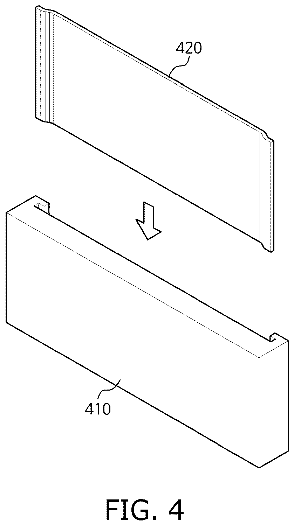

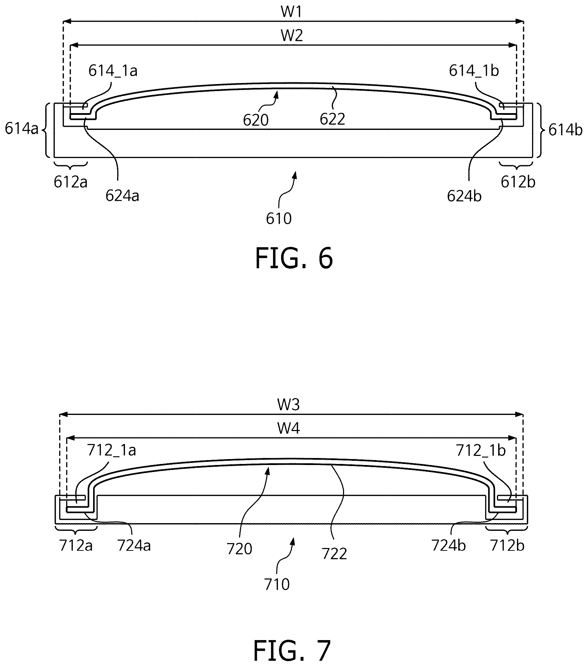

An insertion groove may be formed in, or defined by, the end plate 210, such that at least a part of the buffer member 220 may be slidably inserted into the insertion groove. For example, the insertion groove may be defined by the end plate 210, such that the buffer member 220 may be slidably inserted into the insertion groove from an upper portion or a lower portion of the end plate 210. An example in which the buffer member 220 is slidably inserted into the insertion groove defined by the end plate 210, and is fastened to the end plate 210, will be described with reference to FIG. 4. Detailed examples of a shape of the insertion groove in the end plate 210 will be described with reference to FIGS. 6 and 7.

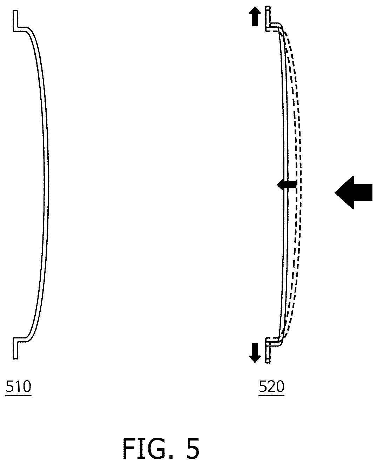

The buffer member 220 may accommodate pressure due to volume expansion of a battery cell located at the outermost portion among a plurality of battery cells accommodated in a battery module (for example, battery module 100 in FIG. 1). For example, the buffer member 220 may include a curved portion protruding in one direction. The curved portion of the buffer member 220 may absorb the pressure applied in a protrusion direction corresponding to a deformation. For example, the buffer member 220 may be a leaf spring made of an elastic material. A detailed example of a shape to which the buffer member 220 is deformed due to the pressure applied to the buffer member 220 will be described with reference to FIG. 5. Furthermore, a detailed example of the shape of the buffer member 220 will be described with reference to FIG. 6.

According to some embodiments of the present disclosure, as the buffer member 220 is coupled to the end plate 210, the pressure due to the volume expansion of a battery cell in the outermost portion among the battery cells accommodated in the battery module may be effectively absorbed by the buffer member 220.

FIG. 3 illustrates a perspective view showing an example of a state in which an end plate 310 is coupled to a buffer member 320, according to one or more embodiments of the present disclosure.

The end plate 310 and the buffer member 320 illustrated in FIG. 3 may respectively correspond to one of the end plates 61 or 62 illustrated in FIG. 1 and one of the buffer members 70a or 70b illustrated in FIG. 1, and may respectively correspond to the end plate 210 and the buffer member 220 illustrated in FIG. 2.

The buffer member 320 may include a curved portion that protrudes toward a battery cell or toward an adjacent battery cell in a state of being fastened to the end plate 310. In a state where an adjacent battery cell expands in volume, the protruding curved portion of the buffer member 320 may be deformed in a direction opposite to the protrusion direction, thereby absorbing the pressure caused by the volume expansion.

FIG. 4 illustrates a perspective view showing an example of a method by which a buffer member 420 is coupled to an end plate 410, according to one or more embodiments of the present disclosure.

The end plate 410 and the buffer member 420 illustrated in FIG. 4 may respectively correspond to one of the end plates 61 or 62 illustrated in FIG. 1 and one of the buffer members 70a or 70b illustrated in FIG. 1. Furthermore, the end plate 410 and the buffer member 420 illustrated in FIG. 4 may respectively correspond to the end plates 210 and/or 310 illustrated in FIGS. 2 and 3 and the buffer members 220 and/or 320 illustrated in FIGS. 2 and 3.

The buffer member 420 may be slidably inserted into the end plate 410, and may be fastened to the end plate 410. To this end, insertion grooves may be formed in, or defined by, the end plate 410 such that parts of opposite ends of the buffer member 420 may be inserted into the insertion grooves by a slide insertion method. For example, the insertion grooves respectively at opposite ends of the end plate 410 may have shapes corresponding to the shapes of at least parts of opposite ends of the buffer member 420. Furthermore, the insertion grooves respectively at opposite ends of the end plate 410 may extend through the end plate 410 from an upper portion to a lower portion.

The buffer member 420 inserted into the insertion grooves may be supported by a bottom plate (for example, bottom plate 64 in FIG. 1) of a battery module (for example, battery module 100 in FIG. 1). In a state where the buffer member 420 is inserted into and fastened to the end plate 410, such that an upper housing or other members may be coupled to an upper end of a battery module (for example, battery module 100 in FIG. 1), a height of the uppermost end of the buffer member 420 may correspond to a height of the uppermost end of the end plate 410, or may be less than the height of the uppermost end of the end plate 410.

FIG. 4 illustrates an example in which the buffer member 420 is fastened to the end plate 410 by being slidably inserted into the buffer member 420 from the upper end of the end plate 410 to the lower end of the end plate 410, but an insertion direction of the buffer member 420 is not limited thereto, and may be changed depending on battery module assembly processes.

For example, in the battery module assembly process, the buffer member 420 may be fastened to the end plate 410 before the end plate 210 is coupled to a housing (for example, a housing including the plates 61, 62, 63, and 64 in FIG. 1). In one or more embodiments, the buffer member 420 may be slidably inserted into the end plate 410 from an upper or lower portion of the end plate 410.

In another example, the buffer member 420 may be fastened to the end plate 410 after the end plate 210 is coupled to the housing (for example, plates 61, 62, 63, and 64 in FIG. 1). In one or more embodiments, the buffer member 420 may be slidably inserted from the top of the end plate.

By forming insertion grooves on opposite ends of the end plate 410 in a shape corresponding to the shape of parts of opposite ends of the buffer member 420, the buffer member 420 may be suitably fastened to the end plate 410 by a slide insertion method, and efforts and costs associated with the process of assembling the end plate 410 and the buffer member 420 may be reduced.

FIG. 5 illustrates an example of a shape in which a buffer member is deformed in response to pressure being applied to the buffer member, according to one or more embodiments of the present disclosure.

The buffer member may accommodate the pressure due to volume expansion of a battery cell (e.g., a battery cell located at the outermost portion among a plurality of battery cells accommodated in a battery module, such as the battery module 100 in FIG. 1). For example, the buffer member may be an elastic member, and may include a curved portion protruding in one direction. The buffer member may reduce shock caused by pressure due to deformation from a first state 510 to a second state 520 by the pressure applied in a protrusion direction.

The first state 510 represents an example of a shape of the buffer member in a state where no pressure is applied. For example, in a state where a buffer member is fastened to an end plate (for example, end plates 61 or 62 in FIG. 1), and if there is no pressure applied from a battery cell (for example, battery cell 10 in FIG. 1), the buffer member may maintain the shape of the first state 510.

The second state 520 represents an example in which a shape of the buffer member is changed due to the pressure applied in a protrusion direction of a curved portion. For example, in a state where the buffer member is fastened to the end plate (for example, end plate 61 or 62 in FIG. 1), and if pressure is applied to the buffer member due to volume expansion of an outermost battery cell (for example, battery cell 10a in FIG. 1), the buffer member may be deformed to a shape of the second state 520. In one or more embodiments, the curved portion of the buffer member may be moved in a direction opposite to the protrusion direction, and a width of the buffer member may reduce shock due to the pressure applied to the buffer member while being increased.

FIG. 6 illustrates an example of a state in which an end plate 610 is coupled to a buffer member 620, according to one or more embodiments of the present disclosure.

The end plate 610 and the buffer member 620 illustrated in FIG. 6 may respectively correspond to one of the end plates 61 or 62 illustrated in FIG. 1 and one of the buffer members 70a or 70b illustrated in FIG. 1, and may respectively correspond to the end plates 210, 310, and/or 410 illustrated in FIGS. 2 to 5 and the buffer members 220, 320, and/or 420 illustrated in FIGS. 2 to 5.

The buffer member 620 may have a central portion including a curved portion 622 protruding in one direction, and opposite ends including a pair of leg portions 624a and 624b that are respectively fastened to insertion grooves 614_1a and 614_1b of the end plate 610. The pair of leg portions 624a and 624b are respectively at opposite sides of the curved portion. For example, the pair of leg portions 624a and 624b may correspond to a plate shape, and may be parallel to each other.

The end plate 610 may include the insertion grooves 614_1a and 614_1b that are respectively formed on opposite ends 612a and 612b, and may respectively accommodate the leg portions 624a and 624b. For example, the insertion grooves 614_1a and 614_1b may be formed by respectively forming grooves on inner surfaces of the protrusions 614a and 614b that are respectively at the ends 612a and 612b on opposite sides of the end plate 610.

The end plate 610 may include the insertion grooves 614_1a and 614_1b formed to allow the leg portions 624a and 624b of the buffer member 620 to be slidably inserted from an upper end of the end plate 610 to a lower end of the end plate 610.

For slide insertion, the insertion grooves 614_1a and 614_1b may be respectively formed on opposite ends of the end plate 610, which are positions respectively corresponding to widths of the pair of leg portions 624a and 624b. Furthermore, the insertion grooves 614_1a and 614_1b may respectively have shapes corresponding to the leg portions 624a and 624b. For example, in a state where the shapes of the leg portions 624a and 624b correspond to a plate shape, surfaces of the insertion grooves 614_1a and 614_1b may be parallel to surfaces of the leg portions 624a and 624b facing the insertion grooves 614_1a and 614_1b. In one or more embodiments, in a state where the leg portions 624a and 624b are fastened to the insertion grooves 614_1a and 614_1b, the surfaces of the leg portions 624a and 624b and the surfaces of the insertion grooves 614_1a and 614_1b respectively facing each other may be parallel to each other. In FIG. 6, the insertion grooves 614_1a and 614_1b may each have three surfaces, and the three surfaces may be respectively parallel to the surfaces of the leg portions 624a and 624b facing the three surfaces. The present disclosure is not limited thereto, and the number of parallel surfaces for slide insertion may be adjusted.

Furthermore, for slide insertion, the insertion grooves 614_1a and 614_1b may extend through the end plate 610 from an upper side thereof to a lower side thereof. For example, the insertion grooves 614_1a and 614_1b may extend through inner surfaces of the protrusions 614a and 614b of the end plate 610 from the upper side to the lower side.

In a state where the buffer member 620 is fastened to the end plate 610, the curved portion 622 may protrude to a greater degree toward a battery cell than the protrusions 614a and 614b of the end plate 610 to absorb the pressure applied by volume expansion of a battery cell (for example, the battery cell 10 in FIG. 1).

In a state where the curved portion 622 is under pressure, a curved shape of the curved portion 622 may be changed, and positions of the leg portions 624a and 624b may be changed. The leg portions 624a and 624b may move in the left and right directions to increase a width of a buffer member while under pressure. To allow the change in position of the leg portions 624a and 624b, a distance W1 between the outermost surfaces of the insertion grooves 614_1a and 614_1b of the end plate 610 may be greater than a width W2 of the undeformed buffer member 620. In one or more embodiments, in a state where the buffer member 620 is fastened to the end plate 610, and if pressure is applied due to volume expansion of the battery cell (for example, battery cell 10 in FIG. 1), the curved portion 622 of the buffer member 620 may move in a direction opposite to a protrusion direction, and a space where a width of the buffer member 620 may be increased may be obtained.

FIG. 7 illustrates an example of a state in which an end plate 710 is coupled to a buffer member 720, according to one or more other embodiments of the present disclosure.

The end plate 710 and the buffer member 720 illustrated in FIG. 7 may use the previously described fastening method according to the slide insertion between the end plate and the buffer member, but the detailed structures of the grooves formed in the end plates are different from each other.

The end plate 710 may include insertion grooves 712_1a and 712_1b that are respectively defined at opposite ends 712a and 712b, and respectively accommodate leg portions. For example, the insertion grooves 712_1a and 712_1b may be formed by forming grooves inside respective opposite ends 712a and 712b of the end plate 710. For example, the insertion grooves 712_1a and 712_1b may be formed on insides of respective surfaces of the end plate 710 that face a battery cell (for example, battery cell 10 in FIG. 1).

The end plate 710 may include the insertion grooves 712_1a and 712_1b formed to cause the leg portions 724a and 724b of the buffer member 720 to be slidably inserted from an upper end of the end plate 710 to a lower end of the end plate 710.

For slide insertion, the insertion grooves 712_1a and 712_1b may be respectively formed on opposite ends of the end plate 710, which are positions corresponding to widths of the pair of leg portions 724a and 724b. Furthermore, the insertion grooves 712_1a and 712_1b may have shapes respectively corresponding to the leg portions 724a and 724b. For example, in a state where the shapes of the leg portions 724a and 724b correspond to a plate shape, surfaces of the insertion grooves 712_1a and 712_1b may be parallel to surfaces of the leg portions 724a and 724b facing the insertion grooves 712_1a and 712_1b. In one or more embodiments, in a state where the leg portions 724a and 724b are respectively fastened to the insertion grooves 712_1a and 712_1b, the surfaces of the leg portions 724a and 724b and the surfaces of the insertion grooves 712_1a and 712_1b facing each other may be parallel to each other. In FIG. 6, the insertion grooves 712_1a and 712_1b may each have three surfaces, and the three surfaces may be respectively parallel to the surfaces of the leg portions 724a and 724b facing the three surfaces. The present disclosure is not limited thereto, and the number of parallel surfaces for slide insertion may be adjusted.

Furthermore, for slide insertion, the insertion grooves 712_1a and 712_1b may extend through the end plate 710 from an upper side thereof to a lower side thereof. For example, the insertion grooves 712_1a and 712_1b may be formed inside the end plate 710, and may extend through the end plate 710 from the upper side thereof to the lower side thereof.

In a state where the buffer member 720 is fastened to the end plate 710, the curved portion 722 may protrude toward a battery cell to a greater degree than the end plate 710 to absorb the pressure applied by volume expansion of a battery cell (for example, the battery cell 10 in FIG. 1).

In a state where the curved portion 722 is under pressure, a curved shape of the curved portion 722 may be changed, and positions of the leg portions 724a and 724b may be changed. The leg portions 724a and 724b may respectively move in the left and right directions to increase a width of a buffer member while under pressure. To allow the change in position of the leg portions 724a and 724b, a distance W3 between the outermost surfaces of the insertion grooves 712_1a and 712_1b of the end plate 610 may be greater than a width W4 of the undeformed buffer member 720. In one or more embodiments, in a state where the buffer member 720 is fastened to the end plate 710, and if pressure is applied due to volume expansion of the battery cell (for example, the battery cell 10 in FIG. 1), the curved portion 722 of the buffer member 720 may be moved in a direction opposite to a protrusion direction, and a space where a width of the buffer member 720 may be increased may be obtained.

At least parts of the leg portions 724a and 724b of the buffer member 720 may be respectively fastened and fixed to the insertion grooves 712_1a and 712_1b of the end plate 710 in a sliding manner. In one or more embodiments, in a state where the buffer member 720 is fastened to the end plate 710, the curved portion 722 may protrude toward a battery cell to a greater degree than corresponding to a thickness of the end plate 710 to absorb the pressure applied by volume expansion of the battery cell (for example, battery cell 10 in FIG. 1) .

In one or more embodiments, the distance W3 between the outermost surfaces of the insertion grooves 712_1a and 712_1b of the end plate 710 may be greater than the width W4 of the undeformed buffer member 720. In one or more embodiments, in a state where the buffer member 720 is fastened to the end plate 710, and if pressure is applied due to volume expansion of the battery cell (for example, battery cell 10 in FIG. 1), the curved portion 722 of the buffer member 720 may move in a direction opposite to a protrusion direction, and a space where a width of the buffer member 720 may increase may be obtained.

FIG. 8 illustrates an example including a second buffer member 840 between a battery cell 830a and an adjacent battery cell 830b, according to one or more embodiments of the present disclosure.

End plates 810a and 810b and first buffer members 820a and 820b illustrated in FIG. 8 may respectively correspond to the end plates 61 and 62 and the buffer members 70a and 70b illustrated in FIG. 1. Furthermore, the end plates 810a and 810b and the first buffer members 820a and 820b illustrated in FIG. 8 may respectively correspond to one of the end plates 610 or 710 illustrated in FIGS. 6 and 7 and to one of the buffer members 620 or 720 illustrated in FIGS. 6 and 7.

In FIG. 8, grooves formed in, or defined by, the end plates 810a and 810b are omitted to show the entire configuration more clearly.

According to one or more embodiments, a battery module (for example, battery module 100 in FIG. 1) may include the end plates 810a and 810b and the first buffer members 820a and 820b that are slidably fastened to the end plates 810a and 810b. In one or more embodiments, a battery module (for example, battery module 100 in FIG. 1) may include at least one second buffer member 840 located between the battery cells 830a and 830b. In one or more embodiments, the second buffer member 840 may include a buffer pad, and a support portion that supports the buffer pad. The second buffer member 840 may absorb a pressure (e.g., predetermined pressure) applied from the battery cells 830a and 830b respectively located on opposite sides of the second buffer member 840.

In one or more embodiments, a thickness of the buffer pad may be greater than a thickness of the support portion, and the buffer pad may protrude on opposite sides of the support portion. Furthermore, a material of the buffer pad may be a microporous material or an elastic polymer compound. The support portion may be an insulator, and may be made of an injection-molded plastic material but is not limited thereto.

In one or more embodiments, the pressure due to volume expansion of a battery cell may be effectively absorbed, and it is possible to reduce or prevent a decrease in lifespan or performance of a battery module due to swelling of the battery cell.

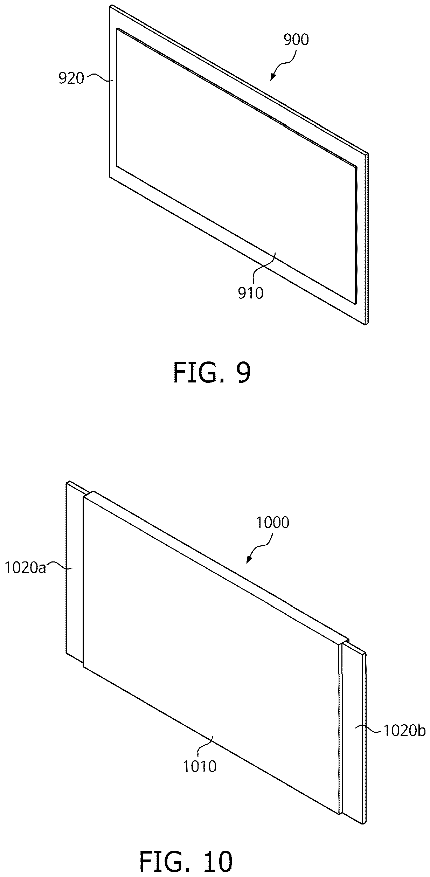

Details of a shape of the second buffer member 840 will be described with reference to FIGS. 8 and 9.

FIG. 9 illustrates an example of a second buffer member 900 according to one or more embodiments of the present disclosure.

The second buffer member 900 illustrated in FIG. 9 may correspond to the second buffer member 840 illustrated in FIG. 8.

According to one or more embodiments, the second buffer member 900 may include a buffer pad 910, and a support portion 920 that supports the buffer pad 910. The second buffer member 900 may absorb a pressure (e.g., predetermined pressure) applied from battery cells (for example, battery cells 830a and 830b in FIG. 8) arranged on opposite sides of the second buffer member 900.

According to one or more embodiments, the support portion 920 may be coupled to and fixed to an edge of the buffer pad 910. In one or more embodiments, a material of the buffer pad 910 may be a microporous material or an elastic polymer compound. Furthermore, the support portion 920 may be an insulator, and may be made of an injection-molded plastic material to support the buffer pad 910, and may maintain a shape of the buffer pad 910. A material of the support portion 920 is not limited to the examples described above, and may be any of various materials to support the buffer pad 910.

FIG. 10 illustrates an example of a second buffer member 1000 according to one or more other embodiments of the present disclosure.

The second buffer member 1000 illustrated in FIG. 10 may correspond to the second buffer member 840 illustrated in FIG. 8.

According to one or more embodiments, the second buffer member 1000 may include a buffer pad 1010, and a support portion 1020 that supports the buffer pad 1010. The second buffer member 1000 may absorb a pressure (e.g., predetermined pressure) applied from battery cells (for example, battery cells 830a and 830b in FIG. 8) respectively located on opposite sides of the second buffer member 1000.

According to one or more embodiments, the support portion 1020 may be coupled to and fixed to opposite edges of the buffer pad 1010. In one or more embodiments, a material of the buffer pad 1010 may be a microporous material or an elastic polymer compound. Furthermore, the support portion 1020 may be an insulator, and may be made of an injection-molded plastic material to support the buffer pad 1010, and to maintain a shape of the buffer pad 1010. A material of the support portion 1020 is not limited to the examples described above and may be made of various materials to support the buffer pad 1010.

According to one or more embodiments, a battery pack including the battery module of the present disclosure may be provided. The battery pack may include a plurality of battery modules according to one or more embodiments of the present disclosure and a housing for accommodating the battery modules. For example, the housing may include first and second housings coupled in opposite directions through the battery modules. The battery modules may be electrically connected to each other by using a bus bar, and the battery modules may be electrically connected to each other in a series/parallel or series-parallel mixed method, thereby obtaining desired or suitable electrical output.

According to one or more embodiments, a vehicle equipped with a battery pack including the battery module of the present disclosure may be provided. The vehicle may further include a vehicle floor, which is one of the vehicle body parts including the battery pack including the pack frame and/or the battery pack cover.

The battery pack may be used as a vehicle battery. The battery pack may include a battery pack cover, which is a part of a vehicle underbody, and a pack frame located under the vehicle underbody. The pack frame and the battery pack cover may be integrally formed with a vehicle floor. The vehicle underbody separates the inside and outside of a vehicle, and the pack frame may be located outside the vehicle.

The battery pack may be mounted on, or in, a vehicle. The vehicle may be, for example, an electric vehicle, a hybrid vehicle, or a plug-in hybrid vehicle. The vehicle may be a four-wheeled vehicle or a two-wheeled vehicle but is not limited thereto, and may include any vehicle configured to receive power from a battery pack.

Although the present disclosure has been described above with respect to embodiments thereof, the present disclosure is not limited thereto. Various modifications and variations can be made thereto by those skilled in the art within the scope of the present disclosure as defined by the appended claims, with functional equivalents thereof to be included therein.

**DESCRIPTION OF SOME REFERENCE CHARACTERS**

| | | | |
|---|---|---|---|
| 100: | battery module | 11, 12: | electrode unit, terminal part |
| 11: | positive terminal | 12: | negative terminal |
| 10: | battery cell | 20: | connection tab |
| 30: | protection circuit module | 13: | vent |
| 50: | connection member | 61, 62: | end plate |
| 63: | side plate | 64: | bottom plate |
| 65: | bolt | 70: | buffer member |
| 810a, 810b: | end plate | 820a, 820b: | first buffer member |
| 830a, 830b: | battery cell | 840: | second buffer member |
| W1, W3: | distance between outermost surfaces of insertion groove of end plate | | |
| W2, W4: | width of undeformed buffer member | | |

## Claims

1. A battery module (100) comprising:
battery cells (10, 10a, 830a, 830b) arranged in one direction;
an end plate (61, 62, 210, 310, 410, 610, 710, 810a, 810b) facing an outer surface of an outermost battery cell (10a, 830a) among the battery cells (10, 10a, 830a, 830b); and
at least one first buffer member (70a, 70b, 220, 320, 420, 620, 720, 820a, 820b) fastened to the end plate (61, 62, 210, 310, 410, 610, 710, 810a, 810b), and comprising a curved portion (622, 722) protruding toward the outermost battery cell (10a, 830a, 830b), and leg portions (624a, 624b, 724a, 724b) respectively on opposite sides of the curved portion (622, 722).

2. The battery module (100) as claimed in claim 1, wherein the end plate (61, 62, 210, 310, 410, 610, 710, 810a, 810b) defines insertion grooves (614_1a, 614_1b, 712_1a, 712_1b) for enabling the leg portions (624a, 624b, 724a, 724b) of the at least one first buffer member (70a, 70b, 220, 320, 420, 620, 720, 820a, 820b) to be slidably inserted from an upper end of the end plate (61, 62, 210, 310, 410, 610, 710, 810a, 810b) to a lower end of the end plate (61, 62, 210, 310, 410, 610, 710, 810a, 810b).

3. The battery module (100) as claimed in claim 2, wherein the insertion grooves (614_1a, 614_1b, 712_1a, 712_1b) extend through the end plate (61, 62, 210, 310, 410, 610, 710, 810a, 810b) from an upper side of the end plate (61, 62, 210, 310, 410, 610, 710, 810a, 810b) to a lower side of the end plate (61, 62, 210, 310, 410, 610, 710, 810a, 810b).

4. The battery module (100) as claimed in claim 2 or 3, wherein a height of the end plate (61, 62, 210, 310, 410, 610, 710, 810a, 810b) is substantially equal to or higher than a height of the at least one first buffer member (70a, 70b, 220, 320, 420, 620, 720, 820a, 820b).

5. The battery module (100) as claimed in any one of claims 2 to 4, wherein the insertion grooves (614_1a, 614_1b, 712_1a, 712_1b) are respectively on opposite ends (712a, 712b) of the end plate (61, 62, 210, 310, 410, 610, 710, 810a, 810b).

6. The battery module (100) as claimed in any one of claims 2 to 5, wherein a distance between outermost surfaces of the insertion grooves (614_1a, 614_1b, 712_1a, 712_1b) is greater than a width of the at least one first buffer member (70a, 70b, 220, 320, 420, 620, 720, 820a, 820b).

7. The battery module (100) as claimed in any one of the preceding claims, wherein the curved portion (622, 722) of the at least one first buffer member (70a, 70b, 220, 320, 420, 620, 720, 820a, 820b) comprises an elastic material configured to absorb pressure due to deformation of a curved shape.

8. The battery module (100) as claimed in claim 7, wherein positions of the leg portions (624a, 624b, 724a, 724b) of the at least one first buffer member (70a, 70b, 220, 320, 420, 620, 720, 820a, 820b) are configured to change as a curved shape of the curved portion (622, 722) changes.

9. The battery module (100) as claimed in claim 7 or 8, wherein positions of the leg portions (624a, 624b, 724a, 724b) respectively move in opposite directions under pressure such that the width of the at least one first buffer member (70a, 70b, 220, 320, 420, 620, 720, 820a, 820b) increases.

10. The battery module (100) as claimed in any one of the preceding claims, further comprising at least one second buffer member (840, 900, 1000) between the battery cells (10, 10a, 830a, 830b), and comprising:
a buffer pad (910, 1010); and
a support portion (920, 1020) for supporting the buffer pad (910, 1010).

11. The battery module (100) as claimed in claim 10, wherein the support portion (920, 1020) is fixed to an edge of the buffer pad (910, 1010).

12. The battery module (100) as claimed in claim 10, wherein the support portion (920, 1020) is fixed to opposite edges of the buffer pad (910, 1010).

13. The battery module (100) as claimed in any one of claims 10 to 12, wherein the buffer pad (910, 1010) is configured to absorb pressure applied from battery cells (10, 10a, 830a, 830b) respectively arranged on opposite sides of the buffer pad (910, 1010).

14. The battery module (100) as claimed in any one of claims 10 to 13, wherein a thickness of the buffer pad (910, 1010) is greater than a thickness of the support portion (920, 1020), and/or
wherein the buffer pad (910, 1010) protrudes on opposite sides of the support portion (920, 1020).

15. The battery module (100) as claimed in any one of claims 10 to 14, wherein a material of the buffer pad (910, 1010) comprises a microporous material or an elastic polymer compound.
